# EUROPEAN PATENT APPLICATION

(11) **EP 4 825 494 A1**
(43) Date of publication of application: **21.10.2026**
(21) Application number: 25171444.0
(22) Date of filing: 18.04.2025
(51) Int. Cl.: B02C 17/16, B02C 21/00, B02C 17/04, B02C 17/18, C04B 7/12, C04B 20/02, B02C 23/24

(54) **METHOD FOR ACTIVATING A CLAY MATERIAL IN A MILL**

(71) Applicant: Holcim Technology Ltd., 6300 Zug (CH)
(72) Inventor: Durand, Thomas, 38070 Saint Quentin Fallavier (FR); Heitzmann, Daniel, 38070 Saint Quentin Fallavier (FR); Dion, Pascal, 38070 Saint Quentin Fallavier (FR); Barbarulo, Remi, 38070 Saint Quentin Fallavier (FR)
(74) Representative: SONN Patentanwälte GmbH & Co KG

(57) **Abstract**

A method for activating a clay material in a ball mill or an agitated media mill (1), the mill (1) having an inlet (2) and an outlet (3) and a recirculation loop (9) for recirculating material leaving the mill (1) via the outlet (3) back to the inlet (2), the method comprising:
providing an input material having particles with a particle size in the range of 0 mm to 50 mm, as determined by sieve analysis,
feeding the input material into the mill (1) through the inlet (2),
grinding the input material in the ball mill (1) in order to obtain an at least partially activated material,
passing air through the millm
discharging a flow of the at least partially activated material from the mill (1) through the outlet (3) and using the recirculation loop (9) to recirculate the flow to the inlet (2),
wherein the recirculation loop (9) comprises a flow splitter (11) or a flow diverter (21), by means of which at least a portion of the flow is continuously or batchwise discharged from the recirculation loop (9).

## Description

The invention refers to a method for activating a clay material in a mill. Further, the invention refers to a system for activating a clay material.

The present invention relates to the field of supplementary cementitious materials (SCMs) and specifically to methods for activating clay materials for use in cement formulations. More particularly, the invention concerns an improved method for mechanical activation of clay materials using industrial mills.

In the cement industry, there is a growing focus on reducing the carbon dioxide footprint associated with cement production. One significant approach involves the partial replacement of Portland cement clinker with supplementary cementitious materials. Among these materials, activated clay has emerged as a promising alternative due to its widespread availability and potential for significant CO₂ reduction when used as a partial clinker replacement.

Conventionally, clay activation is achieved through thermal treatment, typically involving calcination at temperatures around 800°C. This thermal activation process transforms the clay structure, enhancing its hydraulic properties and making it suitable for use in cement formulations. However, the thermal activation process itself contributes to carbon dioxide emissions through both the combustion of fuel required for heating and the decarbonation of certain species present in the clay material.

It is known that clay materials can also be activated through mechanical means, particularly through high-intensity grinding processes. Laboratory studies have successfully employed planetary mills and stirred bead mills to achieve mechanical activation of clay materials. These studies have established that mechanical activation can produce materials with comparable or even better properties to thermally activated clays, while potentially offering advantages in terms of reduced carbon dioxide emissions, especially when powered by low-carbon electricity sources.

However, the transition from laboratory-scale mechanical activation to industrial-scale production presents significant technical challenges. The high-intensity grinding equipment used in laboratory studies, such as planetary ball mills and stirred bead mills, is not readily available or economically viable for industrial-scale production. Furthermore, the specific energy requirements for mechanical activation are substantially higher than those typically employed in conventional cement grinding processes, necessitating careful consideration of process parameters and equipment capabilities.

The mechanical activation of clay materials in mills presents significant technical challenges primarily related to the management of thermal energy generated during the grinding process. During mechanical activation, approximately 90% of the electrical energy input is converted to thermal energy through impact forces and friction between the grinding media, clay particles, and mill components. In a closed mill system operating without ventilation, this thermal energy accumulation can lead to temperature increases exceeding several hundred degrees Celsius, potentially causing severe operational issues. The elevated temperatures can result in thermal expansion of mill components, potentially exceeding the design tolerances of critical elements such as bearings and seals. Furthermore, the high temperatures may induce unwanted physicochemical changes in the clay material, including agglomeration and coating formation on the grinding media and mill walls, which can significantly reduce grinding efficiency.

The conventional solution of implementing mill ventilation to remove excess heat becomes problematic in a closed system, as the airflow would inevitably carry fine particles out of the mill, disrupting the controlled residence time required for adequate activation. Additionally, the significant energy input required for mechanical activation, typically around 650 kWh per ton of material (but highly dependent of material), necessitates extended processing times that exacerbate these thermal management challenges. These technical constraints are particularly evident in batch processing attempts where the mill is completely sealed, as the limited thermal dissipation through the mill walls proves insufficient to maintain safe operating temperatures, potentially leading to mechanical failure of mill components and compromised product quality.

A continuous operation of the mill instead of a batchwise operation could overcome the above problems with regard to thermal energy control. However, the continuous operation of a mill for clay activation presents challenges related to process control and product consistency. In conventional cement grinding, particle size classification through mechanical separation provides a reliable means of controlling product fineness and ensuring adequate grinding of all particles. However, this approach proves problematic when applied to clay activation, as the relationship between particle size and degree of activation is not directly correlated. The mechanical energy input required for activation depends on residence time within the mill rather than achievement of a specific particle size distribution. This fundamental difference creates difficulties in establishing appropriate separation parameters, as the conventional approach of using particle size classification becomes unreliable as a control mechanism for ensuring complete activation.

When operating in continuous mode with a feed rate determined by the required specific energy input (typically 650 kWh/t), the relatively low throughput compared to conventional cement grinding operations further complicates stable operation. The residence time distribution inherent to continuous operation means that some particles may exit the system prematurely, having received insufficient energy for complete activation, while others may be over-processed. This variability in energy input can result in inconsistent product quality, with a portion of the output material remaining partially or entirely unactivated despite meeting particle size specifications. The challenge is further compounded by the difficulty in establishing real-time monitoring of the activation state, making it impossible to implement effective feedback control based on the actual degree of activation achieved.

DE 102023106210 A1 discloses a method for mechanical activation of clay materials by means of ultrafine mills operating at exceptionally high energy inputs of at least 100 kW/m³ of grinding chamber volume. The process incorporates preliminary material preparation through drying and coarse comminution to achieve particle sizes below 2 mm, followed by mechanical activation in an ultrafine mill, preferably an agitator mill operating under precisely controlled conditions including specific grinding media filling levels and operational parameters. Further, the system described in DE 102023106210 A1 involves a material recirculation system, where the activated product undergoes classification with fine fraction recirculation while coarser activated materials constitute the end product.

The invention seeks to overcome the limitations of prior art systems by providing an improved method for operating a mill that ensures consistent activation while managing heat generation and maintaining process stability.

In order to solve these and other objects, a first aspect of the invention provides a method for activating a clay material in a ball mill or an agitated media mill, the mill having an inlet and an outlet and a recirculation loop for recirculating material leaving the mill via the outlet back to the inlet, the method comprising:
providing an input material having particles with a particle size in the range of 0 mm to 50 mm, as determined by sieve analysis,
feeding the input material into the mill through the inlet,
grinding the input material in the ball mill in order to obtain an at least partially activated material,
passing air through the mill,
discharging a flow of the at least partially activated material from the mill through the outlet and using the recirculation loop to recirculate the flow to the inlet,
wherein the recirculation loop comprises a flow splitter or a flow diverter, by means of which at least a portion of the flow is continuously or batchwise discharged from the recirculation loop.

The implementation of a recirculation loop serves as a mechanism for controlling temperature within the mill system while ensuring effective mechanical activation of the clay material.

The continuous circulation of material through the mill and associated circuit components facilitates efficient heat dissipation. As approximately 90% of the mechanical energy input is converted to thermal energy during grinding, the recirculation loop enables this heat to be distributed across a larger mass of material and larger surface area of equipment, enhancing overall thermal dissipation through exchange with air. The movement of material through the circuit components - including elevators, conveyors, separators and filter systems - provides additional opportunities for heat exchange with the environment, effectively preventing the localized temperature accumulation that would occur in a closed mill system.

Another advantage of the invention lies in the ability to process input materials with particle sizes ranging from 0 mm to 50 mm when the mill is a ball mill, or 0-10 mm or 0-8 mm or 0-4 mm, which constitutes an improvement over existing technologies such as those described in DE 102023106210 A1, which are limited to processing materials smaller than 2 mm. This expanded size tolerance eliminates the necessity for preliminary separation steps, thereby streamlining the overall activation process and reducing both equipment requirements and operational complexity.

The input material preferably exhibits a particle size distribution that encompasses the entire range of 0-10 mm or 0-8 mm or 0-4 mm. The presence of particles across the complete spectrum eliminates the need for pre-classification or selective feed preparation, thereby enabling direct processing of raw materials.

The utilization of existing cement plant ball mills for mechanical activation with minimal modifications to current infrastructure enables cement manufacturers to implement clay activation capabilities without substantial capital investment in specialized grinding equipment. The process integration is further enhanced by the elimination of complex classification systems that are characteristic of prior art solutions, where size-based separation mechanisms are required to segregate and recirculate fine fractions while collecting coarse fractions as the end product.

In contrast, the invention employs a simple flow splitter or flow diverter mechanism for material flow management. The elimination of the classification step not only reduces system complexity but also provides more consistent activation conditions throughout the material processing cycle, as particles are not subjected to selective recirculation based on size parameters that may not directly correlate with activation status.

The step of discharging at least a portion of the flow by means of the flow splitter or flow diverter according to the invention is understood to constitute a flow-based distribution mechanism rather than a particle size classification system. The flow splitter or flow diverter operates purely on volumetric or mass flow principles, directing material streams without discriminating based on particle characteristics.

For the purposes of the present invention, the term "activation" of clay material refers to the physico-chemical transformation of clay minerals, particularly those of the kaolinite group, wherein their crystalline structure is modified to create an amorphous or partially amorphous phase exhibiting enhanced reactivity in cementitious systems. This transformation traditionally occurs through thermal treatment (calcination) but is achieved in the invention through mechanical processes that induce structural disorder through intensive grinding. The activated state is characterized by increased surface area, higher structural disorder as measurable by X-ray diffraction analysis, and enhanced pozzolanic reactivity when combined with calcium hydroxide in the presence of water. The degree of activation can be quantified through various analytical methods, including the measurement of amorphous phase content by X-ray diffraction, assessment of pozzolanic activity through strength development in standardized mortar tests, or chemical reactivity studies monitoring the consumption of calcium hydroxide in hydrating cement systems.

The step of passing air through the mill refers to mill ventilation and has the effect of taking heat away from material, the balls or agitating media, and the mill.

Preferably, a separator, such as a cyclone separator, may be arranged in the recirculation loop upstream of the flow splitter or the flow diverter. Such separator is used to achieve heat transfer from the material flow to a separator medium, in particular air, for further drawing heat off from the recirculated material flow. The separator separates the material flow into a coarse material fraction and a fine material fraction that is entrained with the separator air. The coarse material fraction is kept in the recirculation loop and the fine fraction is preferably fed to a filter, in which the fine fraction is separated from the separator air, the fine fraction being reintroduced into the recirculation loop downstream of the separator.

According to a preferred embodiment of the invention, a batch wise operation of the mill is provided. Specifically, in a first phase of the process, a first batch of the input material is fed into the mill through the inlet and ground in the mill, the flow diverter being in a first position, in which the entire flow of the at least partially activated material is recirculated to the inlet, whereafter the flow diverter is switched to a second position, in which, in a second phase, the entire flow of the at least partially activated material is discharged from the recirculation loop, said discharging preferably being conducted until the mill has been emptied of substantially the entire first batch. The flow of material out of the mill is mainly created by the ventilation air.

In the initial phase, the mill operates in a closed-circuit configuration where the flow diverter maintains complete recirculation of the partially activated material back to the inlet. This continuous recirculation ensures uniform energy distribution throughout the material batch and enables controlled accumulation of mechanical energy input until the desired degree of activation is achieved. Upon reaching the target activation parameters, the process transitions to its second phase through switching the flow diverter to a state that enables complete discharge of the activated material from the recirculation loop. This embodiment provides several advantages over continuous processing: it ensures consistent specific energy input across the entire material batch, eliminates the potential for premature material discharge before adequate activation, and enables precise control over the activation process through monitoring of cumulative energy input. The complete emptying of the mill between batches prevents cross-contamination between successive material charges and enables accurate tracking of process parameters for quality control purposes.

After processing a first batch of the input material, a second batch of input material may preferably be fed into the mill through the inlet and ground in the mill.

According to an alternative embodiment of the invention, a portion of the flow of the at least partially activated material is continuously discharged from the recirculation loop via the flow splitter and fresh input material is fed into the mill through the inlet. Thus, a continuous operation mode is provided, where a portion of the activated material stream is continuously extracted while fresh input material is introduced, enabling stable steady-state operation. The flow splitter allows to withdraw a specified part of the flow from the recirculation loop, resulting in that some fraction of material may exit the recirculation loop having received insufficient specific energy input for complete activation, e.g. falling below the critical threshold of e.g. 650 kWh/t (depending on material) required for effective mechanical activation. This limitation emerges from the statistical nature of particle residence times within the mill, where some material inevitably follows shorter flow paths through the system. While the flow splitter-based configuration offers operational simplicity by eliminating complex particle size-based separation mechanisms, it represents a compromise between process efficiency and the degree of activation.

In a particularly advantageous embodiment of the invention, the portion of the flow discharged from the recirculation loop amounts substantially to the flow of fresh input material into the inlet. For example, the flow splitter may be regulated so as to discharge substantially the same amount as the fresh feed to the mill. This ensures consistent mill loading and controlled average specific energy to the material. Preferably, the portion of the flow discharged from the recirculation loop, which corresponds substantially to the flow of fresh input material into the inlet, is controlled as a function of the desired specific energy input onto the product.

In a preferred embodiment of the invention, an existing cement mill from a cement manufacturing plant may be used for the mechanical activation of clay. This eliminates the need for specialized activation equipment, significantly reducing capital investment requirements. Moreover, cement mills typically offer adequate installed power capacity to achieve the required specific energy input for clay activation, while their conventional cooling and ventilation systems can be adapted to manage the thermal load generated during the activation process. The ability to repurpose existing cement grinding equipment for mechanical clay activation also allows manufacturers to alternate between cement grinding and clay activation based on market demands and material availability.

A cement ball mill is a large-scale grinding device commonly used in cement manufacturing plants, comprising a horizontally mounted rotating cylindrical shell filled with grinding media, typically steel balls of varying sizes. The mill may be divided into multiple compartments separated by diaphragms and is equipped with ventilation systems for temperature control and material transport. Such mills are characterized by their substantial dimensions, robust construction, and high installed power capacity suitable for continuous grinding operations, typically featuring shell diameters of 3-6 meters and lengths of 8-20 meters.

The ball mill may comprise a single compartment, two compartments for enhanced grinding control, or three compartments with an optional drying chamber when processing materials with elevated moisture content. The grinding media can be either conventionally graded ball charges or monosized balls, with the selection depending on the feed material properties. For the input particle size range of 0-4 mm, monosized grinding media of 20-40 mm diameter has proven particularly effective.

According to preferred embodiment of the invention, the recirculation loop comprises a bucket elevator for lifting the at least partially activated material discharged from the outlet of the mill, and wherein the flow splitter or flow diverter is arranged downstream of the bucket elevator.

Concomitantly with the grinding, a fine fraction of the at least partially activated material that is suspended in a gas volume of the cement mill is extracted from the mill and removed from the gas phase by means of a filter, wherein the fine fraction is recirculated into the cement mill. Such ventilation fines, which become airborne during the mechanical activation process, are extracted along with the ventilation gas flow and subsequently separated from the gas phase using a filter system. The recirculation of these collected fines back into the mill prevents the loss of partially activated material that might otherwise be discharged prematurely, ensures that all material fractions receive adequate mechanical energy input for activation, and maintains consistent material loading within the mill.

According to a second aspect, the invention provides a system for activating a clay material, comprising a mill having an inlet and an outlet, a recirculation loop connecting the outlet to the inlet for recirculating material discharged from the outlet back to the inlet, wherein the recirculation loop comprises a flow splitter or a flow diverter configured to continuously or batchwise discharge at least a portion of material flow from the recirculation loop.

For realizing a batch-wise operation mode, the flow diverter is switchable between a first position, in which the entire material flow is recirculated to the inlet, and a second position, in which the entire material flow is discharged from the recirculation loop.

The system further comprises a ventilation system configured to extract a gas volume containing suspended fine material from the mill, a filter configured to remove the fine material from the gas volume, and a return line configured to recirculate the removed fine material into the mill. Preferably, the return line is configured to feed the fine material into the recirculation loop.

For realizing a continuous operation mode, the flow splitter is preferably configured to continuously discharge a flow equal to the fresh feed flow.

Preferably, the mill is a cement ball mill or an agitated media mill of a cement manufacturing plant. Preferably, the mill is a ball mill.

Preferably, the recirculation loop comprises a bucket elevator arranged to lift material discharged from the outlet of the mill, and wherein the flow splitter or flow diverter is arranged downstream of the bucket elevator.

### Examples

The invention will now be described with reference to laboratory experiments and exemplary embodiments.

First, activation tests were carried out with different types of raw clay, in order to determine the level of activation when subjecting raw clay to a mechanical activation. For each of the raw clay candidates both, traditional thermal activation and mechanical activation experiments, were undertaken. Thermal activation was carried out in a static furnace at a temperature of 800°C over a time period of 3 hours. Mechanical activation was carried out using a planetary ball mill Retsch PM400 with the following operating conditions:
- Balls: 20mm
- Ratio ball charge to material: 4.3
- Speed: 400rpm
- Activation duration: 10min to 120min.

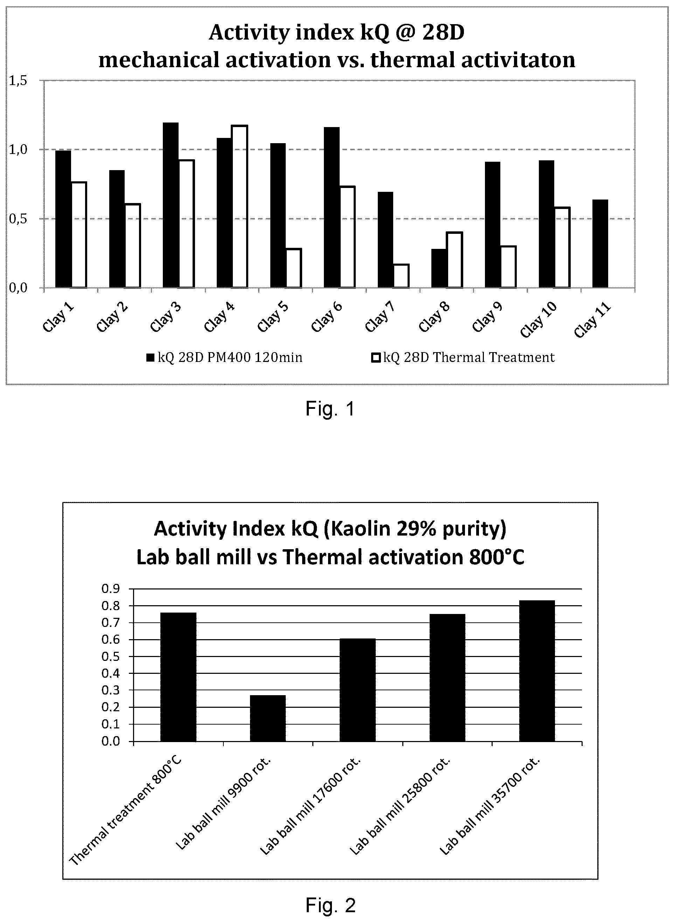

Fig. 1 shows the degree of activation of each raw clay material as represented by the activity index kQ at 28 days. The activity index is calculated from compressive strengths @28 days on a standard EN (European standard) mortar. The binder tested contains 50% OPC + 25% limestone filler + 25% activated clay. The activity index kQ is calculated as follows: ${k}_{Q} = \frac{1}{{m}_{Q}} \times \left(\left(\frac{CS}{{CS}_{0}}+0.5\right){m}_{W}-{k}_{C}{m}_{C}-{k}_{L}{m}_{L}\right)$

Where CS refers to the compressive strength, mW refers to the mass of water, mC refers to the mass of OPC, mL refers to the mass of limestone, mQ refers to the mass of calcined clay.

It can be seen that mechanical activation results in an improved activity index for almost all sources of raw clay.

For a specific source of raw clay, namely "Clay 1", which is a clay with 29% kaolinite and roughly 60% quartz and 10% Muscovite, additional tests were carried out in a laboratory ball mill, in order to determine the effect of varying the mechanical energy applied to the raw clay material in the ball mill. Fig. 2 shows the resulting activity index when varying the number of rotations of the ball mill, compared to the thermal activation carried out at 800°C. As can be seen, the activity index to be achieved by means of mechanical activation surpasses the activity index achieved by thermal activation when at least 35700 rotations were used.

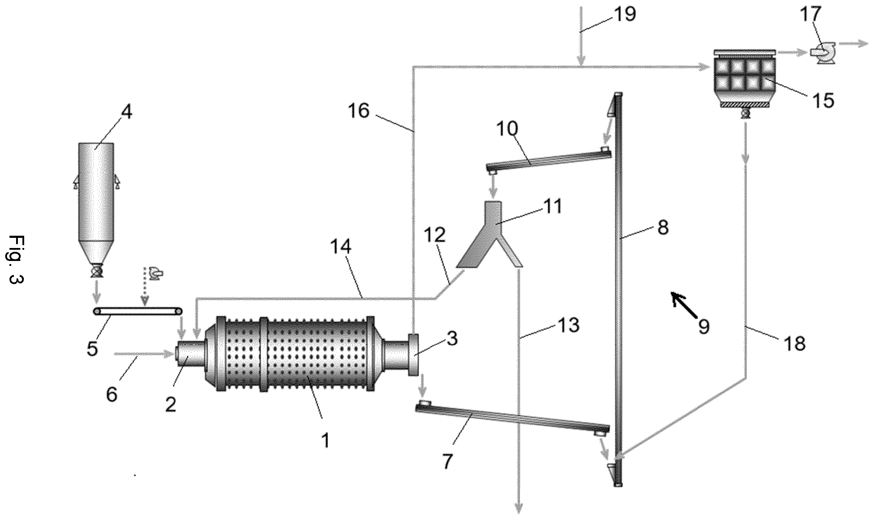

Further, the invention is described with reference to a clay activation system that is shown in Fig. 3. The clay activation system comprises a ball mill 1 that is commonly used to grind cement clinker in a cement manufacturing plant. The cement ball mill 1 comprises an inlet 2 and an outlet 3. Raw clay material stored in a silo 4 is conveyed to the inlet 2 by means of a conveyor 5 and fed into the ball mill 1 through the inlet 2. Further, ventilation air 6 is introduced into the ball mill 1 via the inlet 2. During ball mill operation, as the raw clay material is ground and moves through the mill due to the rotational motion, internal lifters, and the push resulting from material (fresh or recirculated) fed at the inlet, it reaches a certain level at the outlet end. When this material level reaches the height of overflow openings, overflow material flows out through these openings by gravity and is subsequently transported to a bucket elevator 8 by means of a conveyor 7.

The bucket elevator 8 forms part of a recirculation loop 9 that connects the outlet 3 to the inlet 2 for recirculating material discharged from the outlet 3 back to the inlet 2. Material leaving the bucket elevator 8 is conveyed by a conveyor 10 to a flow splitter 11, which divides the flow of material into a recirculation portion 12 and a remaining portion 13. The recirculation portion 12 is recirculated to the inlet 2 of the ball mill 1 via the line 14, while the remaining portion 13 is withdrawn from the recirculation loop 9 as the final activated material of the activation process. A continuous activation process is established by adjusting the flow of the remaining portion 13 to be substantially equal to the flow of fresh material taken from silo 4 to the mill inlet 2.

A fine fraction of the clay material that is suspended in the ventilation air within the ball mill 1 is withdrawn from the outlet 3 and guided to a bag filter 15 via a line 16, to which fresh air 19 can be added. In the bag filter 15, the fine fraction is separated from the gaseous phase. The gaseous phase is withdrawn with the aid of a fan 17, while the fine fraction is fed into the recirculation loop 9, e.g. by adding the fine fraction to the lower stage of the bucket elevator via the return line 18.

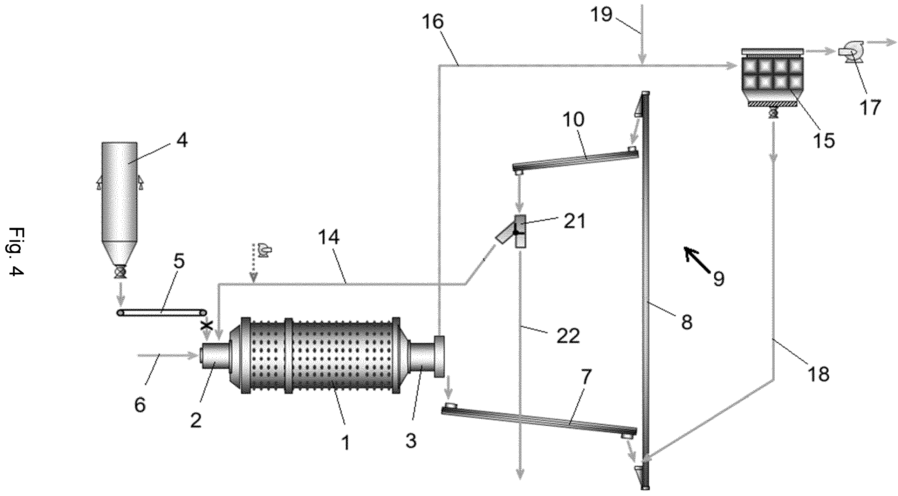

Fig. 4 shows an alternative embodiment of an activation system, which is suitable for carrying out a batch-wise activation process. The same reference numerals are used as in the embodiment of Fig. 3. The embodiment of Fig. 4 differs from the embodiment shown in Fig. 3 in that a flow diverter 21 is provided instead of a flow splitter 11. The flow diverter 21 serves to direct the flow of material either to the line 14 for recirculating the entire material to the inlet 2 of the ball mill 1 or to the line 22 for withdrawing the entire material from the recirculation loop 9 so as to empty the ball mill 1.

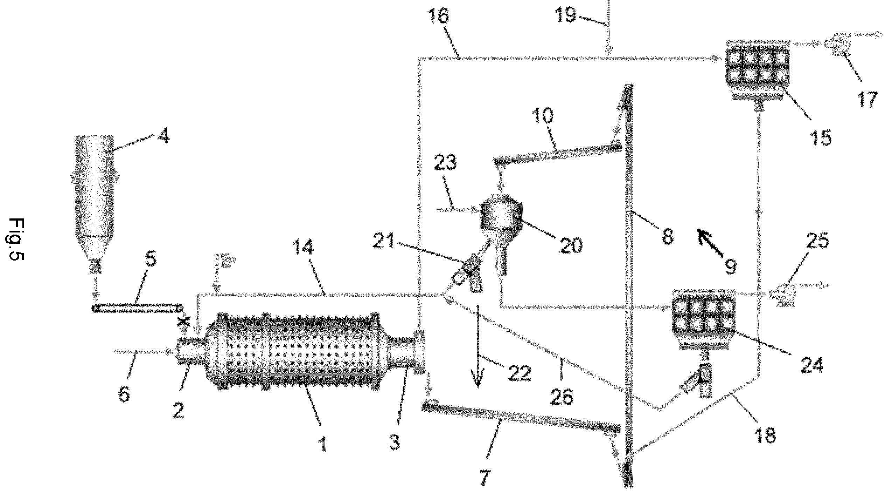

Fig. 5 shows an embodiment of an activation system according to Fig. 4, but with the additional arrangement of a cyclone separator 20 in the recirculation loop 9 between the conveyor 10 and the flow diverter 21. The cyclone separator 20 comprises a fresh air inlet 23, in which the material coming from the conveyor 10 gets suspended, so that heat is transferred from the material to the fresh air. The coarse solid fraction leaving the cyclone separator 20 enters the flow diverter 21, while the air within the fine particle fraction suspended therein is guided to a bag filter 24. In the bag filter 24, the fine fraction is separated from the gaseous phase. The gaseous phase is withdrawn with the aid of a fan 25, while the fine fraction is returned into the recirculation loop 9, e.g. by adding the fine fraction into the line 14 downstream of the flow diverter 21 via the return line 26.

## Claims

1. A method for activating a clay material in a ball mill or agitated media mill (1), the mill (1) having an inlet (2) and an outlet (3) and a recirculation loop (9) for recirculating material leaving the mill (1) via the outlet (3) back to the inlet (2), the method comprising:
providing an input material having particles with a particle size in the range of 0 mm to 50 mm, as determined by sieve analysis,
feeding the input material into the mill (1) through the inlet (2),
grinding the input material in the mill (1) in order to obtain an at least partially activated material,
passing air through the mill,
discharging a flow of the at least partially activated material from the mill (1) through the outlet (3) and using the recirculation loop (9) to recirculate the flow to the inlet (2),
wherein the recirculation loop (9) comprises a flow splitter (11) or a flow diverter (21), by means of which at least a portion of the flow is continuously or batchwise discharged from the recirculation loop (9).

2. The method according to claim 1, wherein, in a first phase, a first batch of the input material is fed into the mill (1) through the inlet (2) and ground in the mill (1), the flow diverter (21) being in a first position, in which the entire flow of the at least partially activated material is recirculated to the inlet (2), whereafter the flow diverter (21) is switched to a second position, in which, in a second phase, the entire flow of the at least partially activated material is discharged from the recirculation loop (9), said discharging preferably being conducted until the mill (1) has been emptied of substantially the entire first batch.

3. The method according to claim 2, wherein a second batch of input material is fed into the mill (1) through the inlet (2) and ground in the mill (1).

4. The method according to claim 1, wherein a flow of fresh input material is fed into the mill through the inlet (2) and wherein a portion of the flow of the at least partially activated material is continuously discharged from the recirculation loop (9) via the flow splitter (11).

5. The method according to claim 4, wherein the portion of the flow discharged from the recirculation loop (9) amounts substantially to the flow of fresh input material into the inlet (2).

6. The method according to any one of claims 1 to 5, wherein a cement ball mill of a cement manufacturing plant is used as said mill (1).

7. The method according to any one of claims 1 to 6, wherein the recirculation loop (9) comprises a bucket elevator (8) for lifting the at least partially activated material discharged from the outlet (3) of the mill (1), and wherein the flow splitter (11) or flow diverter (21) is arranged downstream of the bucket elevator (8).

8. The method according to any one of claims 1 to 7, wherein a fine fraction of the at least partially activated material that is suspended in a gas volume of the cement mill (1) is extracted from the mill (1) and removed from the gas phase by means of a filter (15), wherein the fine fraction is recirculated into the cement mill (1).

9. The method according to claim 8, wherein recirculating the fine fraction comprises feeding the fine fraction into the recirculation loop (9).

10. The method according to any one of claims 1 to 9, wherein a separator (20) is arranged in the recirculation loop (9) upstream of the flow diverter (21) or flow splitter (11).

11. A system for activating clay material, comprising a ball mill (1) or an agitated media mill having an inlet (2) and an outlet (3), a recirculation loop (9) connecting the outlet (3) to the inlet (2) for recirculating material discharged from the outlet (3) back to the inlet (2), wherein the recirculation loop (9) comprises a flow splitter (11) or a flow diverter (21) configured to continuously or batchwise discharge at least a portion of material flow from the recirculation loop (9).

12. The system according to claim 11, wherein the flow diverter (21) is switchable between a first position, in which the entire material flow is recirculated to the inlet (2), and a second position, in which the entire material flow is discharged from the recirculation loop (9).

13. The system according to claim 11, wherein the flow splitter (11) is configured to continuously discharge a material flow from the recirculation loop (9) that substantially corresponds to an amount of a fresh feed into the inlet (2).

14. The system according to claim 11, 12 or 13, wherein the mill (1) is a cement ball mill of a cement manufacturing plant.

15. The system according to any one of claims 11 to 14, wherein the recirculation loop (9) comprises a bucket elevator (8) arranged to lift material discharged from the outlet (3) of the mill (1), and wherein the flow splitter (11) or flow diverter (1) is arranged downstream of the bucket elevator (8).

16. The system according to any one of claims 11 to 15, further comprising a ventilation system configured to extract a gas volume containing suspended fine material from the mill (1), a filter (15) configured to remove the fine material from the gas volume, and a return line (18) configured to recirculate the removed fine material into the mill (1).

17. The system according to claim 16, wherein the return line (18) is configured to feed the fine material into the recirculation loop (9).

18. The system according to any one of the claims 11 to 17, wherein a separator (20), preferably a cyclone separator, is arranged in the recirculation loop (9) upstream of the flow diverter (21) or flow splitter (11).
